(19) Europäisches Patentamt
European Patent Office
Office européen des brevets

(11) EP 3 842 133 A1

(12) EUROPEAN PATENT APPLICATION
published in accordance with Art. 153(4) EPC

(43) Date of publication:
**30.06.2021 Bulletin 2021/26**

(21) Application number: **19851811.0**

(22) Date of filing: **20.08.2019**

(51) Int Cl.:
***B01D 71/40*** *(2006.01)* ***B01D 69/12*** *(2006.01)*
***C08F 20/36*** *(2006.01)*

(86) International application number:
**PCT/JP2019/032418**

(87) International publication number:
**WO 2020/040129 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **20.08.2018 JP 2018154271**

(71) Applicant: **The University of Tokyo**
**Bunkyo-ku,**
**Tokyo 113-8654 (JP)**

(72) Inventors:
- **KATO Takashi**
**Tokyo 113-8654 (JP)**
- **Daniel Kuo**
**Tokyo 113-8654 (JP)**
- **KATAYAMA Hiroyuki**
**Tokyo 113-8654 (JP)**
- **Liu Miaomiao**
**Tokyo 113-8654 (JP)**

(74) Representative: **Plougmann Vingtoft a/s**
**Strandvejen 70**
**2900 Hellerup (DK)**

# (54) NANOSTRUCTURE COMPOSITE SEMIPERMEABLE MEMBRANE

(57) To provide a composite semipermeable membrane having high water permeability and separability.

Provided is a composite semipermeable membrane which is for water treatment and comprises a microporous support membrane and a polymerized liquid crystal thin film, the composite semipermeable membrane being characterized in that a polymerized liquid crystal represents a smectic structure.



Printed by Jouve, 75001 PARIS (FR)

## Description

Background Art

Methods for removing and detoxifying harmful substances and pathogens (for example, pathogenic viruses) in water can be roughly divided into two, methods for physically separating target by filtration and precipitation, and methods for changing chemical structure of target by chemicals and ultraviolet rays.

The method of filtering harmful substances has advantages of having no problem of generation of harmful by-products due to chemical reactions and resistance of pathogens to chemicals and ultraviolet rays (for example, norovirus is resistant to chlorination for drinking water and is not inactivated). On the other hand, this method has a disadvantage that it is difficult to remove a small-size filtration target.

Currently, ultrafiltration membranes, nanofiltration membranes, and reverse osmosis membranes are used as membranes for removing nanoparticles such as viruses by filtration. Among them, nanofiltration membranes and reverse osmosis membranes can more reliably remove viruses, since pores included in the membranes are small.

In addition, as a form of nanofiltration membrane and reverse osmosis membrane, a composite semipermeable membrane comprising a microporous support membrane that gives physical strength to the membrane and a separation functional layer that gives substantial separation performance has become mainstream. Thus, there is an advantage that an optimum material can be selected for each of the microporous support membrane and the separation functional layer.

As the material of the separation functional layer that gives an ability to sufficiently remove target such as viruses, it is preferable to have a pore that becomes a uniform water-permeable channel in order to achieve both water permeability and separability of removed substance. Since liquid crystal molecules form a regular periodic structure by self-assembly, it is considered that a high-performance separation membrane having pores of uniform size can be prepared by utilizing this characteristic.

Patent Literature 1 and Patent Literature 2 disclose a separation membrane using a liquid crystal as a separation functional layer. Further, Patent Literature 3 discloses a composite semipermeable membrane characterized by exhibiting a bicontinuous cubic liquid crystal structure, and achieves improvements in water permeability and separability.

However, the separation membranes disclosed in Patent Literatures 1 and 2 were not practical as separation membranes for water treatment due to their low water permeability or separation performance. Also, further improvement in performance is required for the composite semipermeable membrane disclosed in Patent Literature 3.

Citation List

Patent Literatures

Patent Literature 1: WO 2004/060531 A
Patent Literature 2: US 2009/173693 A
Patent Literature 3: JP 2011-255255 A

Summary of Invention

Technical Problem To be Solved

An object of the present invention is to provide a composite semipermeable membrane having high water permeability and separability. More specifically, an object of the present invention is to provide a composite semipermeable membrane for water treatment that enables more reliable (for example, 99.99% or more) virus removal.

Means for Solving the Problem

As a separation membrane for water treatment using a conventional liquid crystal, composite semipermeable membranes using a bicontinuous cubic liquid crystal structure or a columnar liquid crystal structure have been reported, but they have been in a situation where improvement in performance of water permeability or separation function is required. The present inventors have found and investigated that by using a polymerized liquid crystal having a smectic structure, and layering hydrophilic parts, a water-permeable portion can be increased, and uniformity of pore size can be secured, consequently found that it is possible to provide a composite semipermeable membrane exhibiting high separability to nanoparticles such as viruses, and completed the present invention.

More specifically, the present invention provides the followings:

[1] A composite semipermeable membrane for water treatment, comprising a microporous support membrane and a polymerized liquid crystal thin film, wherein the polymerized liquid crystal exhibits a smectic structure.
[2] The composite semipermeable membrane for water treatment according to [1], wherein the polymerized liquid crystal is obtained by polymerizing at least one of compounds represented by general formula (I):

[Chemical 1]

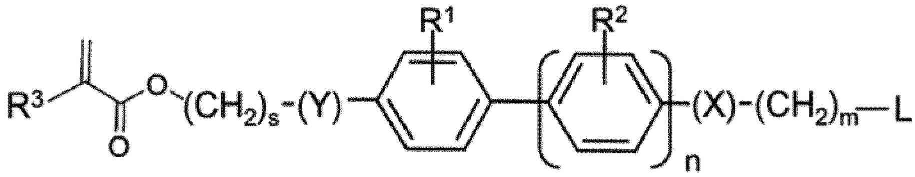

(I)

wherein in the general formula (I),

$R^1$, if present, is a fluorine atom, a chlorine atom, a methyl group or a methoxy group,
$R^2$, if present, is a fluorine atom, a chlorine atom, a methyl group or a methoxy group,
$R^3$ is a linear or branched alkyl group having 1 to 8 carbon atoms or hydrogen atom,
X, if present, is an oxygen atom or $-CH_2O-$,
Y, if present, is an oxygen atom or $-CH_2O-$,
n is an integer from 1 to 2,
m is an integer from 1 to 12,
s is an integer from 1 to 12, and
L is a cationic group, an anionic group or a neutral group.

[3] The composite semipermeable membrane for water treatment according to [2], wherein the cationic group is represented by one of the following formulas (1) to (3):

[Chemical 2]

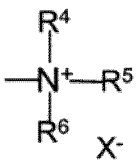

(1)

wherein in the formula (1),

$R^4$, $R^5$ and $R^6$ may be the same or different, and are $(CH_2)_{k-1}CH_3$, $(CF_2)_{k-1}CF_3$, $(CH_2)_g(CF_2)_{k-1}CF_3$ or $(CH_2CH_2O)_gCH_3$, and k and g may be the same or different in $R^4$, $R^5$ and $R^6$, in which g is an integer from 1 to 8, and k is an integer from 1 to 8, and
$X^-$ is one of $Cl^-$, $Br^-$, $I^-$, $F^-$, $BF_4^-$, $PF_6^-$, $CF_3SO_3^-$ and $(CF^3SO^2)_2N^-$,

[Chemical 3]

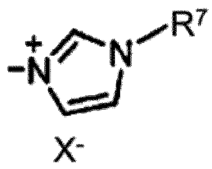

(2)

wherein in the formula (2),

$R^7$ is a linear or branched alkyl group having 1 to 6 carbon atoms, and
$X^-$ is as defined in formula (1),

[Chemical 4]

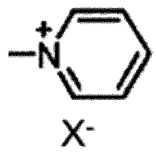

(3)

wherein in the formula (3), $X^-$ is as defined in formula (1).

[4] The composite semipermeable membrane for water treatment according to [2], wherein the anionic group is represented by one of $-Bz-O^-Y^{n+}$ (Bz represents a benzene ring), $-SO_3^-Y^{n+}$, $-COO^-Y^{n+}$, $-O-CO^-=C(CN)_2 \cdot Y^{n+}$, or $-SO_2-N^--SO_2-CF_3 \cdot Y^{n+}$ (where $Y^{n+}$ is a metal ion or an ammonium ion) .

[5] The composite semipermeable membrane for water treatment according to [2], wherein the neutral group is represented by the following formula (4):

[Chemical 5]

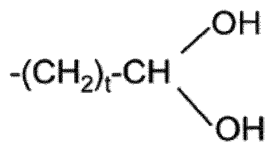

(4)

wherein in the formula (4), t is an integer from 1 to 6.

[6] The composite semipermeable membrane for water treatment according to claim 1, wherein the polymerized liquid crystal has a repeating unit derived from at least one monomer represented by the general formula (I):

[Chemical 6]

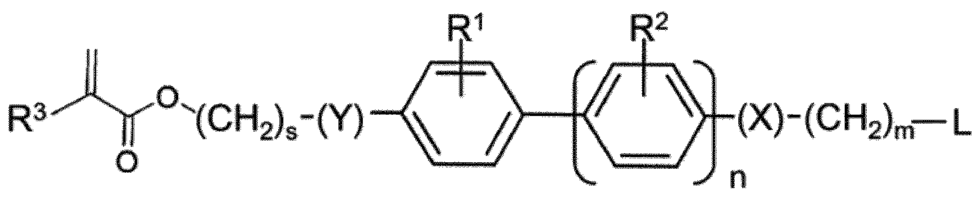

(I)

wherein in the general formula (I),

$R^1$, if present, is a fluorine atom, a chlorine atom, a methyl group or a methoxy group,
$R^2$, if present, is a fluorine atom, a chlorine atom, a methyl group or a methoxy group,
$R^3$ is a linear or branched alkyl group having 1 to 8 carbon atoms or hydrogen atom,
X, if present, is an oxygen atom or $-CH_2O-$,
Y, if present, is an oxygen atom or $-CH_2O-$,
n is an integer from 1 to 2,
m is an integer from 1 to 12,
s is an integer from 1 to 12, and
L is a cationic group, an anionic group or a neutral group.

Advantageous Effects of Invention

According to the present invention, it is possible to provide a composite semipermeable membrane having high water permeability and separability. In particular, according to the present invention, it is possible to provide a composite semipermeable membrane for water treatment that enables more reliable virus removal as compared to the prior art.

Brief Description of Drawings

Fig. 1 illustrates schematic diagrams of various liquid crystal structures.
Fig. 2 illustrates schematic diagrams of a conventional liquid crystal membrane and a smectic liquid crystal membrane.
Fig. 3 illustrates a schematic diagram of a smectic liquid crystal structure.
Fig. 4 is a comparison of viral inhibition rates and time change of membrane permeate flux of liquid crystal membranes of Example 1 and Comparative Example 1.

Description of Embodiments

Embodiments of the present invention will be described in detail below.
The composite semipermeable membrane of the present invention is composed of a microporous support membrane and a polymerized liquid crystal thin film, and provided by coating the polymerized liquid crystal thin film on the microporous support membrane.

Microporous Support Membrane

In the present invention, the microporous support membrane is for giving strength to a separation functional layer substantially having separation performance of nanoparticles such as viruses. Size and distribution of pores on the surface of the microporous support membrane used in the present invention are not particularly limited, but, for example, a support film having uniform pores or pores that gradually increase from a surface on a side where the separation functional layer is formed to the other surface, and having a fine pore size of 1 nm or more and 100 nm or less on the surface on the side where the separation functional layer is formed is preferable. When the pore diameter on the surface of the microporous support membrane is within this range, a composite semipermeable membrane to be obtained has high water permeability, and the structure can be maintained while preventing the separation functional layer from falling into the pores of the microporous support membrane during pressurization operation.
The microporous support membrane has a thickness preferably in the range of 1 $\mu$m to 5 mm, and more preferably in the range of 10 to 100 $\mu$m. When the thickness is small, strength of the microporous support membrane tends to decrease, and as a result, strength of the composite semipermeable membrane tends to decrease. When the thickness is large, it is difficult to handle when the microporous support membrane and the composite semipermeable membrane obtained from the microporous support membrane are bent and used.
Further, in order to increase the strength of the composite semipermeable membrane, the microporous support membrane may be reinforced with cloth, non-woven fabric, paper or the like. The preferred thickness of these reinforcing materials is 50 to 150 $\mu$m.
Materials used for the microporous support membrane are not particularly limited. For example, homopolymers or copolymers such as polysulfone, polyethersulfone, polyamide, polyester, cellulosic polymer, vinyl polymer, polyphenylene sulfide, polyphenylene sulfide sulfone, polyphenylene sulfone and polyphenylene oxide can be used. These

polymers can be used alone or in blends. Among the above, examples of the cellulosic polymer include cellulose acetate, cellulose nitrate and the like. As the vinyl polymer, polyethylene, polypropylene, polyvinyl chloride, polyacrylonitrile and the like are exemplified as preferable ones. Among them, homopolymers and copolymers such as polysulfone, polyethersulfone, polyamide, polyester, cellulose acetate, cellulose nitrate, polyvinyl chloride, polyacrylonitrile, polyphenylene sulfide, and polyphenylene sulfide sulfone are preferable. Further, among these materials, it is particularly preferable to use polysulfone and polyethersulfone, which have high chemical stability, mechanical strength and thermal stability and are easy to mold.

Polymerized Liquid Crystal Thin Film

The separation functional layer of the present invention is a layer substantially having separation performance in a composite semipermeable membrane, and is formed of a polymerized liquid crystal thin film.

The polymerized liquid crystal thin film in the present invention is characterized in that the polymerized liquid crystal exhibits a smectic structure. As a separation membrane for water treatment using a conventional liquid crystal, composite semipermeable membranes using a bicontinuous cubic liquid crystal structure or a columnar liquid crystal structure have been reported, but the proportion of hydrophilic parts is not sufficient, and improvement in performance of water permeability or separation function has been required. In the present invention, it is possible to impart high separability to nanoparticles such as viruses by increasing a water-permeable portion by layering hydrophilic parts by using a polymerized liquid crystal having a smectic structure. Further, by increasing area of the hydrophilic parts, it is possible to increase the amount of water treatment (membrane permeate flux) per unit time (see Figs. 1 and 2).

In a preferred embodiment of the composite semipermeable membrane for water treatment of the present invention, the polymerized liquid crystal is obtained by polymerizing at least one of compounds represented by general formula (I):

[Chemical 7]

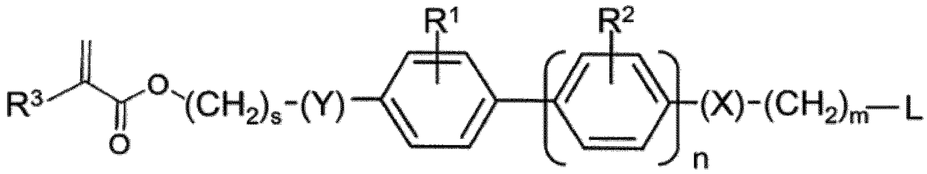

(I)

In the general formula (I), $R^1$, if present, is a fluorine atom, a chlorine atom, a methyl group, a methoxy group, or the like.

In the general formula (I), $R^2$, if present, is a fluorine atom, a chlorine atom, a methyl group, a methoxy group, or the like.

In one aspect of the present invention, substituents defined as $R^1$ and $R^2$ are not present, and benzene rings of the general formula (I) are all unsubstituted benzene rings.

In the general formula (I), $R^3$ is a linear or branched alkyl group having 1 to 8 carbon atoms or a hydrogen atom, and is preferably a methyl group.

In the general formula (I), X, if present, is an oxygen atom or $-CH_2O-$, and is preferably an oxygen atom.

Also, in one aspect of the present invention, X is absent and $-(CH_2)_m-$ group is directly attached to the benzene ring.

In the general formula (I), Y, if present, is an oxygen atom or $-CH_2O-$, and is preferably an oxygen atom.

Also, in one aspect of the present invention, Y is absent and $-(CH_2)_s-$ group is directly attached to the benzene ring.

In the general formula (I), n is an integer from 1 to 2, preferably 1.

In the general formula (I), m is an integer from 1 to 12, preferably an integer from 2 to 8.

In the general formula (I), s is an integer from 1 to 12, preferably an integer from 2 to 8.

In the general formula (I), L is a cationic group, an anionic group, or a neutral group.

The cationic group in the general formula (I) is preferably represented by one of the following formulas (1) to (3).

[Chemical 8]

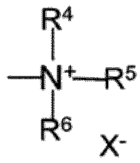

(1)

In the formula (1), $R^4$, $R^5$ and $R^6$ may be the same or different, and are $(CH_2)_{k-1}CH_3$, $(CF_2)_{k-1}CF_3$, $(CH_2)_g(CF_2)_{k-1}CF_3$ or $(CH_2CH_2O)_gCH_3$, and k and g may be the same or different in $R^4$, $R^5$ and $R^6$, in which g is an integer from 1 to 8, and k is an integer from 1 to 8.

Further, in the formula (1), $X^-$ is one of $Cl^-$, $Br^-$, $I^-$, $F^-$, $BF_4^-$, $PF_6^-$, $CF_3SO_3^-$ and $(CF^3SO^2)\ _2N^-$.)

[Chemical 9]

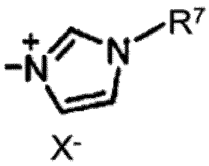

(2)

In the formula (2), $R^7$ is a linear or branched alkyl group having 1 to 6 carbon atoms, and is preferably a methyl group.

In the formula (2), $X^-$ is as defined in the formula (1).)

[Chemical 10]

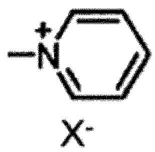

(3)

In the formula (3), $X^-$ is as defined in the formula (1) .

In one preferable aspect of the present invention, the cationic group is a cationic group represented by the formula (2).

The anionic group in the general formula (I) is preferably represented by one of $-SO_3^-Y^{n+}$, $-COO^-Y^{n+}$, $-O-CO^-=C(CN)_2 \cdot Y^{n+}$, or $-SO_2-N^--SO_2-CF_3 \cdot Y^{n+}$ (where $Y^{n+}$ is a metal ion or an ammonium ion).

The neutral group in the general formula (I) is preferably represented by the following formula (4).

[Chemical 11]

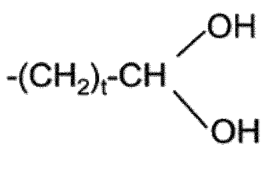

(4)

In the formula (4), t is an integer from 1 to 6.

The compound of the general formula (I) may be polymerized using one type alone, or may be polymerized using two or more types in combination.

Another embodiment of the present invention is a composite semipermeable membrane for water treatment in which the polymerized liquid crystal has a repeating unit derived from at least one compound (monomer) represented

by the general formula (I).

[Chemical 12]

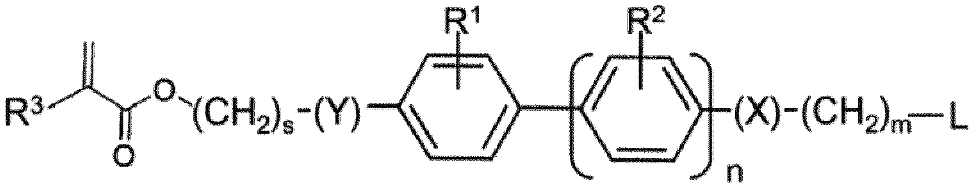

(I)

Here, $R^1$, $R^2$, $R^3$, X, Y, n, m, s and L are the same as those described in detail in the above-described embodiment (that is, the polymerized liquid crystal is obtained by polymerizing at least one of compounds represented by the general formula (I)).

The range of the molecular weight of the polymerized liquid crystal is not particularly limited, but it is desirable that the number average molecular weight is 10,000 or more, and preferably tens of thousands or more, from the viewpoint of structural stability. Further, the molecular weight distribution of the polymerized liquid crystal is not particularly limited.

The thickness of the polymerized liquid crystal thin film in the composite semipermeable membrane of the present invention is preferably in the range of 5 to 500 nm. The lower limit of the thickness of the liquid crystal thin film is more preferably 10 nm, and the upper limit is more preferably 200 nm. By thinning the liquid crystal thin film, cracks are less likely to occur, and deterioration of solute removal performance due to film defects generated by cracks can be avoided. Further, the liquid crystal thin film thus thinned has high water permeability.

As is clear from the general formula (I) and the structural formulas (1) to (4), the compound represented by the general formula (I) has both a high polar portion and a low polar portion in the molecule. By phase separation, each portion is continuously connected between molecules to form a smectic liquid crystal structure. The connection of the high polar portions forms a hydrophilic water-permeable channel, and the connection of the low polar portions forms a part of a partition wall of the hydrophobic water-permeable channel.

The compound represented by the general formula (I) can be prepared by a method described in Reference Literature 2 (K. Hoshino, M. Yoshino, T. Mukai, K. Kishimoto, H. Ohno and T. Kato, J. Polym. Sci. A: Polym. Chem. 41, 3486-3492 (2003)) and a method similar thereto. However, a synthesis method is not limited to them, and the synthesis method does not affect content of the present invention.

Here, Fig. 3 is a diagram showing a smectic liquid crystal structure.

In the present invention, the polymerized liquid crystal thin film exhibits a smectic structure. The smectic structure is a structure characterized by formation of layered aggregates (lamellas), and in the present invention, it is a smectic liquid crystal structure obtained by polymerizing a liquid crystal.

When the layer formed by aggregation of high polar portions functions as a conduction channel for molecules and ions, a layer formed by a hydrophobic portion surrounds the conduction channel and functions as a stabilizing layer.

Examples of literature including a description relating to the smectic liquid crystal structure include Reference Literature 1 (JP 2002-358821 A), Reference Literature 2 (K. Hoshino, M. Yoshino, T. Mukai, K. Kishimoto, H. Ohno and T. Kato, J. Polym. Sci. A: Polym. Chem. 41, 3486-3492 (2003)), Reference Literature 3 (C. Tschierske, J. Mater. Chem. 11, 2647-2671 (2001)), Reference Literature 4 ("Liquid Crystal Handbook", pp.12-18, edited by Liquid Crystal Handbook Editorial Committee, Maruzen Publishing Co., Ltd. (2000)), and the like.

Next, a method for producing the composite semipermeable membrane of the present invention will be described.

A method exemplified for forming a polymerized liquid crystal thin film which is a separation functional layer on a microporous support membrane comprises steps of forming a liquid crystal thin film on a microporous support membrane and polymerizing the liquid crystal by polymerization.

The method of forming a liquid crystal thin film on a microporous support membrane is not particularly limited. Examples thereof include a method of applying a liquid crystal solution on a microporous support membrane and then removing the solvent, a method of transferring a liquid crystal thin film formed on a peelable substrate onto a microporous support membrane, and the like.

The method of applying a liquid crystal solution on a microporous support membrane is not particularly limited, but a method capable of uniformly applying a liquid crystal solution is preferable, for example, a method of applying a liquid crystal solution using an apparatus such as a spin coater, a wire bar, a flow coater, a die coater, a roll coater, or a spray. The solvent of the liquid crystal solution is not particularly limited as long as it does not dissolve the microporous support membrane but dissolves the liquid crystal and a polymerization initiator added as needed. The solvent of the

liquid crystal solution can be removed by a known method, and the method is not particularly limited, but it is preferable to sufficiently remove the solvent by heating or reducing the pressure so as not to interfere with self-assembly of the liquid crystal.

The liquid crystal thin film can be formed on the peelable substrate by a known method, and the method is not particularly limited, but a method of applying the liquid crystal solution on the peelable substrate and then removing the solvent is preferably used. In this method, film thickness of the liquid crystal thin film can be easily controlled by application conditions such as liquid crystal concentration. As the peelable substrate, a material such as glass, metal, silicon wafer or polymer can be used without particular limitation. Further, if necessary, a peelable substrate surface-treated by silicon coating, corona discharge or the like can also be used. The method of applying the liquid crystal solution on the peelable substrate is not particularly limited, but a method capable of uniformly applying a liquid crystal solution is preferable, for example, a method of applying a liquid crystal solution using an apparatus such as a spin coater, a wire bar, a flow coater, a die coater, a roll coater, or a spray. The solvent of the liquid crystal solution is not particularly limited as long as it does not dissolve the peelable substrate but dissolves the liquid crystal and a polymerization initiator added as needed. The solvent of the liquid crystal solution can be removed by a known method, and the method is not particularly limited, but it is preferable to sufficiently remove the solvent by heating or reducing the pressure so as not to interfere with self-assembly of the liquid crystal.

Subsequently, the surface of the liquid crystal thin film formed on the peelable substrate is brought into contact with the surface of the microporous support membrane, and the liquid crystal is polymerized by polymerization, and then the peelable substrate is peeled off, thereby obtaining a target composite semipermeable membrane.

Examples of the method of polymerizing the liquid crystal by polymerization include heat treatment, electromagnetic wave irradiation, electron beam irradiation, plasma irradiation, and the like. Here, electromagnetic waves include infrared rays, ultraviolet rays, X-rays, $\gamma$-rays, and the like. An optimum polymerization method may be appropriately selected, but polymerization by electromagnetic wave irradiation is preferable in terms of running cost, productivity and the like. Among electromagnetic waves, infrared irradiation and ultraviolet irradiation are more preferable in terms of convenience. When actually polymerizing using infrared rays or ultraviolet rays, it is not necessary for these light sources to selectively generate only light in this wavelength range, and it is sufficient as long as these light sources include electromagnetic waves in these wavelength ranges. However, it is preferable that the intensity of these electromagnetic waves is higher than those of electromagnetic waves in other wavelength ranges in terms of shortening polymerization time, easily controlling polymerization conditions and the like.

The electromagnetic wave can be generated by using a halogen lamp, a xenon lamp, a UV lamp, an excimer lamp, a metal halide lamp, a rare gas fluorescent lamp, a mercury lamp, or the like. The energy of electromagnetic wave is not particularly limited as long as polymerization proceeds, but it is preferable to use ultraviolet rays because of convenience of apparatus and handling. Thickness and form of the separation functional layer according to the present invention may greatly change also depending on respective polymerization conditions, and in the case of polymerization by electromagnetic waves, the thickness and form of the separation functional layer may change depending on wavelength and intensity of the electromagnetic waves, distance from an object to be irradiated, and treatment time. Therefore, these conditions need to be optimized as appropriate. In particular, reaction temperature is an important factor for maintaining an ordered structure of the liquid crystal, and it is necessary to control it within the temperature range in which a liquid crystal phase is exhibited according to the structure of the liquid crystal.

In the production method of the present invention, it is preferable to add a polymerization initiator, a polymerization accelerator or the like to the liquid crystal for the purpose of increasing the polymerization reaction rate. Here, the polymerization initiator and the polymerization accelerator are not particularly limited, and are appropriately selected according to the structure of the liquid crystal, polymerization method, and the like.

As the polymerization initiator, known ones can be used without particular limitation as long as they are soluble in the solvent used. For example, examples of an initiator for polymerization by electromagnetic waves include benzoin ether, dialkyl benzyl ketal, dialkoxyacetophenone, acylphosphine oxide or bisacylphosphine oxide, $\alpha$-diketone (for example, 9,10-phenanthrenequinone), diacetylquinone, furylquinone, anisylquinone, 4,4'-dichlorobenzylquinone and 4,4'-dialkoxybenzylquinone, and camphorquinone. Examples of an initiator for polymerization by heat include an azo compounds(for example, 2,2'-azobis(isobutyronitrile) (AIBN) or azobis-(4-cyanovaleric acid), or peroxide (for example, dibenzoyl peroxide, dilauroyl peroxide, tert-butyl peroctanoate, tert-butyl perbenzoate or di-(tert-butyl)peroxide), as well as an aromatic diazonium salt, bis-sulfonium salt, aromatic iodonium salt, aromatic sulfonium salt, potassium persulfate, ammonium persulfate, alkyl lithium, cumyl potassium, sodium naphthalene, distyryl dianion, and the like. Among the initiators for polymerization by heat, benzopinacol and 2,2'-dialkylbenzopinacol are particularly preferred as an initiator for radical polymerization.

Peroxides and $\alpha$-diketones are preferably used in combination with an aromatic amine to accelerate an initiation reaction. This combination is also called a redox system. Examples of such systems are combinations of benzoyl peroxide or camphorquinone with an amine (for example, N,N-dimethyl-p-toluidine, N,N-dihydroxyethyl-p-toluidine, p-dimethyl-ethyl aminobenzoate ester or a derivative thereof). Further, a system containing a peroxide in combination with ascorbic

acid, barbiturate or sulfinic acid as a reducing agent is also preferable.

When the amount of polymerization initiator added is too large, the self-assembly of the liquid crystal is inhibited, so it is preferably 5% by weight or less based on the liquid crystal.

The composite semipermeable membrane thus obtained can be used as it is, but it is preferable to hydrophilize the surface of the membrane with, for example, an alcohol-containing aqueous solution or an alkaline aqueous solution before use.

The composite semipermeable membrane of the present invention formed by the above method is wound with a raw water flow passage material such as a plastic net, a permeated water flow passage material such as tricot, and, if needed, a film for improving pressure resistance, around a cylindrical water collecting pipe provided with a large number of drilled pores and the wound composite semipermeable membrane is suitably used as a spiral type composite semipermeable membrane element. Further, this element can also be formed into a composite semipermeable membrane module connected in series or in parallel and housed in a pressure vessel.

Moreover, the composite semipermeable membrane, its element and module can constitute a fluid separation device, in combination with a pump for feeding raw water thereto, an apparatus for pretreating the raw water, and the like. By using this separation apparatus, raw water can be separated into permeated water such as drinking water and concentrated water which has not permeated through a membrane, thereby water suitable for an intended purpose can be obtained.

When operating pressure of the fluid separation device is higher, the salt rejection rate improves. However, considering that the energy required for operation also increases, and in view of durability of the composite semipermeable membrane, the operating pressure for water to be treated to permeate through the composite semipermeable membrane is preferably 0.1 MPa or more and 10 MPa or less. As the feed water temperature increases, the salt rejection rate decreases, but as the temperature decreases, the membrane permeate flux also decreases, so the temperature is preferably 5°C or more and 45°C or less. Further, as to the pH of the feed water, there are concerns of occurrence of scales of magnesium or the like in a case of feed water with high salt concentration such as seawater, and deterioration of the membrane due to high pH operation, thus operation in a neutral range is preferred.

The raw water treated by the composite semipermeable membrane of the present invention is a liquid mixture containing $10^1$ to $10^8$ PFU (plaque forming unit)/mL virus such as tap water, seawater, brine, river water, lake water, groundwater, or wastewater.

In addition, the raw water treated by the composite semipermeable membrane of the present invention also includes biopharmacy (containing therapeutic proteins, antibodies, hormones, or the like), aqueous desiccant solutions, liquid media for cell culture bioreactors and the like that contain $10^1$ to $10^8$ PFU (plaque forming unit)/mL of virus.

The type of virus to be inhibited by the composite semipermeable membrane of the present invention is not particularly limited, and examples thereof include pathogenic viruses (for example, norovirus, antivirus, hepatitis C virus, and the like) and non-pathogenic viruses (bacteriophage Qβ, bacteriophage MS2, and the like).

## Examples

Hereinafter, the present invention will be described in more detail with reference to Examples, but the present invention is not limited to these Examples.

Characteristics of membrane in Examples and Comparative Examples were evaluated by measuring the virus inhibition rate using a composite semipermeable membrane. Bacteriophage Qβ was used as a virus to be inhibited. Bacteriophage Qβ is a non-pathogenic virus that infects Escherichia coli in a shape similar to a sphere with a diameter of 25 nanometers. The virus concentration was measured by plaque method. The virus inhibition ability was determined by feeding feed water with a concentration of $1.0 \times 10^7$ PFU/mL (PFU: virus concentration unit (plaque forming unit)) at a temperature of 25°C and an operating pressure of 0.3 MPa to perform membrane filtration treatment, measuring quality of permeated water and feed water, and calculating salt rejection rate and membrane permeate flux by the following formulas. As the viral inhibition rate of the membrane is higher, water with lower virus concentration is obtained, and also as the membrane permeate flux is higher, permeated water is obtained in lower energy. Therefore, a membrane that achieves both high values is practically an excellent membrane.

(Viral inhibition rate (LRV))

$$\text{Viral inhibition rate (LRV)} = \text{Log}_{10}\ (\text{Virus concentration in feed water/Virus concentration in permeated water})$$

When viral inhibition rate (LRV) is 4, the virus concentration in the permeated water is 1/10,000 of the concentration in the feed water.

(Membrane permeate flux)

$$\text{Membrane permeate flux } (m^3/m^2/\text{day}) = \text{Amount of permeated water per day/Membrane area}$$

(Example 1)

A microporous support membrane was prepared by casting a 15.7 wt% dimethylformamide solution of polysulfone on a polyester non-woven fabric to a thickness of 200 μm at room temperature (25°C), immediately immersing it in pure water and leaving it for 5 minutes.

Table 1 shows compound structure of compounds showing liquid crystal structure, temperature range showing liquid crystal structure, and liquid crystal structure shown in the temperature range. A chloroform solution containing 1.0% by weight of Compound 1 in Table 1 and 0.01% by weight of 2,2-dimethoxy-2-phenylacetophenone was applied on a PET film coated with silicon as a peelable substrate by spin coating, and then vacuum dried to form a liquid crystal thin film. The temperature of the obtained liquid crystal thin film was raised to 100°C, the surface of the microporous support membrane was brought into contact with the surface of the liquid crystal thin film, then the temperature was lowered to 60°C, and ultraviolet rays with a wavelength of 365 nm were emitted from the peelable substrate side for 10 minutes to polymerize the liquid crystal thin film. The peelable substrate was peeled off from the obtained composite to prepare a target composite semipermeable membrane.

As a result of measuring salt rejection rate and membrane permeate flux of the composite semipermeable membrane thus obtained, values shown in Table 2 were obtained.

(Example 2)

A chloroform solution containing 1.0% by weight of Compound 1 in Table 1 and 0.01% by weight of 2,2-dimethoxy-2-phenylacetophenone was applied on a PET film coated with silicon as a peelable substrate by spin coating, and then dried to form a liquid crystal thin film. The temperature of the obtained liquid crystal thin film was raised to 100°C, the surface of the microporous support membrane was brought into contact with the surface of the liquid crystal thin film, then the temperature was lowered to 90°C, and ultraviolet rays with a wavelength of 365 nm were emitted from the peelable substrate side for 10 minutes to polymerize the liquid crystal thin film. The peelable substrate was peeled off from the obtained composite to prepare a target composite semipermeable membrane.

As a result of measuring salt rejection rate and membrane permeate flux of the composite semipermeable membrane thus obtained, values shown in Table 2 were obtained.

(Comparative Example 1)

A chloroform solution containing 1.0% by weight of Compound 3 in Table 1 and 0.01% by weight of 2,2-dimethoxy-2-phenylacetophenone was applied on a PET film coated with silicon as a peelable substrate by spin coating, and then vacuum dried to form a liquid crystal thin film. The temperature of the obtained liquid crystal thin film was raised to 80°C, the surface of the microporous support membrane was brought into contact with the surface of the liquid crystal thin film, then the temperature was lowered to 15°C, and ultraviolet rays with a wavelength of 365 nm were emitted from the peelable substrate side for 10 minutes to polymerize the liquid crystal thin film. The peelable substrate was peeled off from the obtained composite to prepare a target composite semipermeable membrane.

As a result of measuring viral inhibition rate and membrane permeate flux of the composite semipermeable

membrane thus obtained, values shown in Table 2 were obtained.

[Table 1]

| Compound number | Compound structure | Polymerization temperature (°C) | Liquid crystal structure shown at temperature in left |
|---|---|---|---|
| 1 | 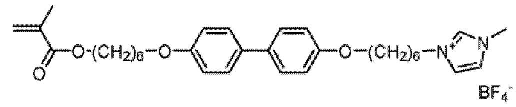 | 60 | Smectic liquid crystal structure |
| 1 | 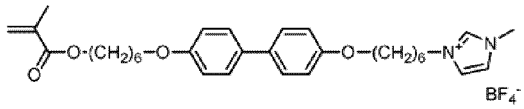 | 90 | Smectic liquid crystal structure |
| 2 | 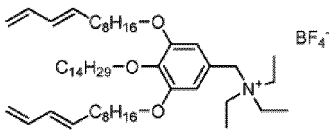 | 15 | Bicontinuous cubic liquid crystal structure |

[Table 2]

| | Compound | Viral inhibition rate (LRV) | Average membrane permeate flux in permeation test for 6 hours (L/m$^2$/hr) |
|---|---|---|---|
| Example 1 | Compound 1 | 6.4 | 17.3 |
| Example 2 | Compound 1 | 4. 5 | 14.8 |
| Comparative Example 1 | Compound 2 | 4.2 | 0.49 |

In addition, for the smectic liquid crystal membrane (SmA1) of Example 1 and a cubic liquid crystal membrane (Cubic) of Comparative Example 1, viral inhibition rate and time change of the membrane permeate flux when the feed water was continuously fed for a predetermined time are shown in Fig. 4. In Fig. 4, a vertical axis on the left side shows the viral inhibition rate, and a vertical axis on the right side shows the membrane permeate flux (L/m$^2$/hr). From Fig. 1, it is shown that the smectic liquid crystal membrane of Example 1 maintains a high viral inhibition rate even when fed with feed water for 6 hours or more.

As described above, the composite semipermeable membrane obtained by the present invention has both a high membrane permeate flux and a viral inhibition rate, which could not be achieved by existing liquid crystal membrane, and is excellent in practicality.

Industrial Applicability

The composite semipermeable membrane of the present invention can be suitably used for producing a semipermeable membrane for water treatment, which is particularly useful for removing viruses and the like.

## Claims

1. A composite semipermeable membrane for water treatment, comprising a microporous support membrane and a polymerized liquid crystal thin film, wherein the polymerized liquid crystal exhibits a smectic structure.

2. The composite semipermeable membrane for water treatment according to claim 1, wherein the polymerized liquid crystal is obtained by polymerizing at least one of compounds represented by general formula (I):

[Chemical 1]

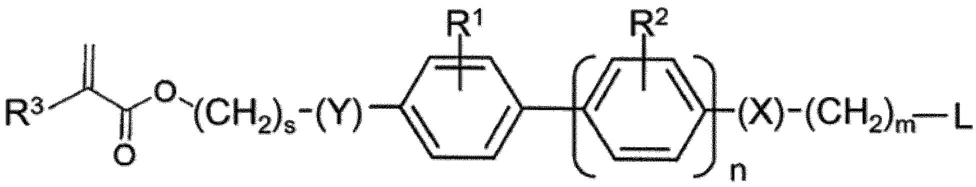

(I)

wherein in the general formula (I),

$R^1$, if present, is a fluorine atom, a chlorine atom, a methyl group or a methoxy group,
$R^2$, if present, is a fluorine atom, a chlorine atom, a methyl group or a methoxy group,
$R^3$ is a linear or branched alkyl group having 1 to 8 carbon atoms or hydrogen atom,
X, if present, is an oxygen atom or $-CH_2O-$,
Y, if present, is an oxygen atom or $-CH_2O-$,
n is an integer from 1 to 2,
m is an integer from 1 to 12,
s is an integer from 1 to 12, and
L is a cationic group, an anionic group or a neutral group.

**3.** The composite semipermeable membrane for water treatment according to claim 2, wherein the cationic group is represented by one of the following formulas (1) to (3):

[Chemical 2]

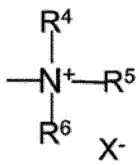

(1)

wherein in the formula (1),

$R^4$, $R^5$ and $R^6$ may be the same or different, $(CH_2)_{k-1}CH_3$, $(CF_2)_{k-1}CF_3$, $(CH_2)_g(CF_2)_{k-1}CF_3$ or $(CH_2CH_2O)_gCH_3$, and k and g may be the same or different in $R^4$, $R^5$ and $R^6$, where g is an integer from 1 to 8, and k is an integer from 1 to 8, and
$X^-$ is one of $Cl^-$, $Br^-$, $I^-$, $F^-$, $BF_4^-$, $PF_6^-$, $CF_3SO_3^-$ and $(CF^3SO^2)_2N^-$,

[Chemical 3]

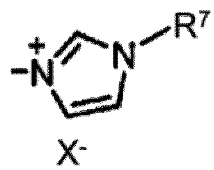

(2)

wherein in the formula (2),

$R^7$ is a linear or branched alkyl group having 1 to 6 carbon atoms, and
$X^-$ is as defined in the formula (1),

[Chemical 4]

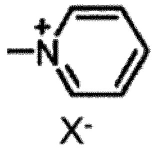

(3)

wherein in the formula (3), $X^-$ is as defined in the formula (1).

**4.** The composite semipermeable membrane for water treatment according to claim 2, wherein the anionic group is represented by one of $-Bz-O^-Y^{n+}$ (Bz represents a benzene ring), $-SO_3^-Y^{n+}$, $-COO^-Y^{n+}$, $-O-CO^-=C(CN)_2 \cdot Y^{n+}$, or $-SO_2-N^--SO_2-CF_3 \cdot Y^{n+}$ (where $Y^{n+}$ is a metal ion or an ammonium ion) .

**5.** The composite semipermeable membrane for water treatment according to claim 2, wherein the neutral group is represented by the following formula (4):

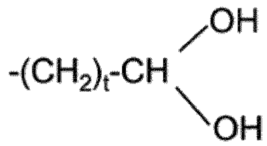

(4)

wherein in the formula (4), t is an integer from 1 to 6.

**6.** The composite semipermeable membrane for water treatment according to claim 1, wherein the polymerized liquid crystal has a repeating unit derived from at least one monomer represented by general formula (I):

[Chemical 5]

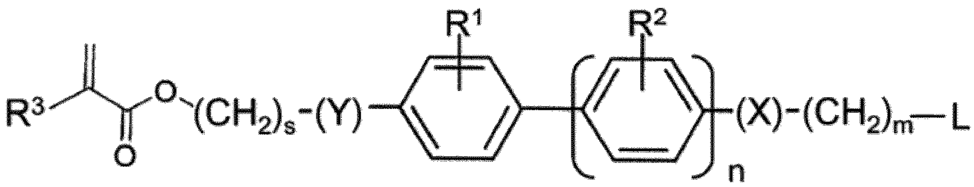

(I)

wherein in the general formula (I),

$R^1$, if present, is a fluorine atom, a chlorine atom, a methyl group or a methoxy group,
$R^2$, if present, is a fluorine atom, a chlorine atom, a methyl group or a methoxy group,
$R^3$ is a linear or branched alkyl group having 1 to 8 carbon atoms or hydrogen atom,
X, if present, is an oxygen atom or $-CH_2O-$,
Y, if present, is an oxygen atom or $-CH_2O-$,
n is an integer from 1 to 2,
m is an integer from 1 to 12,
s is an integer from 1 to 12, and
L is a cationic group, an anionic group or a neutral group.

FIG. 1

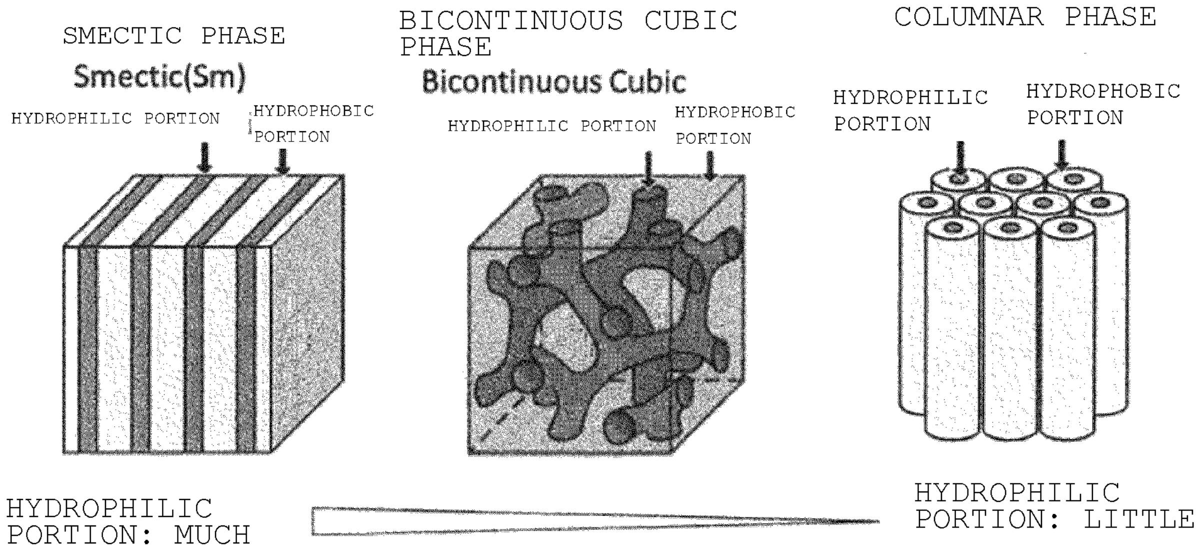
SMECTIC PHASE
Smectic(Sm)
HYDROPHILIC PORTION
HYDROPHOBIC PORTION
BICONTINUOUS CUBIC PHASE
Bicontinuous Cubic
HYDROPHILIC PORTION
HYDROPHOBIC PORTION
COLUMNAR PHASE
HYDROPHILIC PORTION
HYDROPHOBIC PORTION
HYDROPHILIC PORTION: MUCH
HYDROPHILIC PORTION: LITTLE

FIG. 2

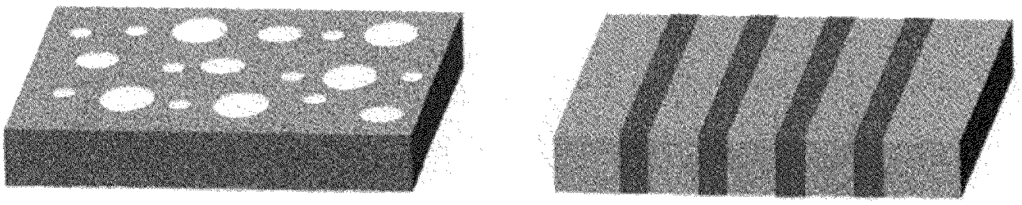

The conventional design of membrane utilizes pores

THIS STUDY : Smectic (Sm) liquid crystal (LC) membrane with 2D structure

FIG. 3

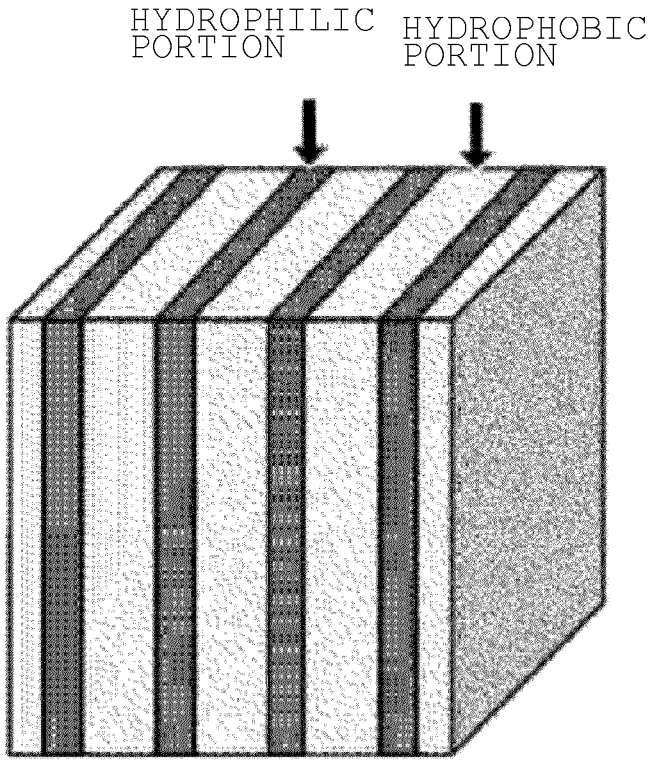

FIG. 4

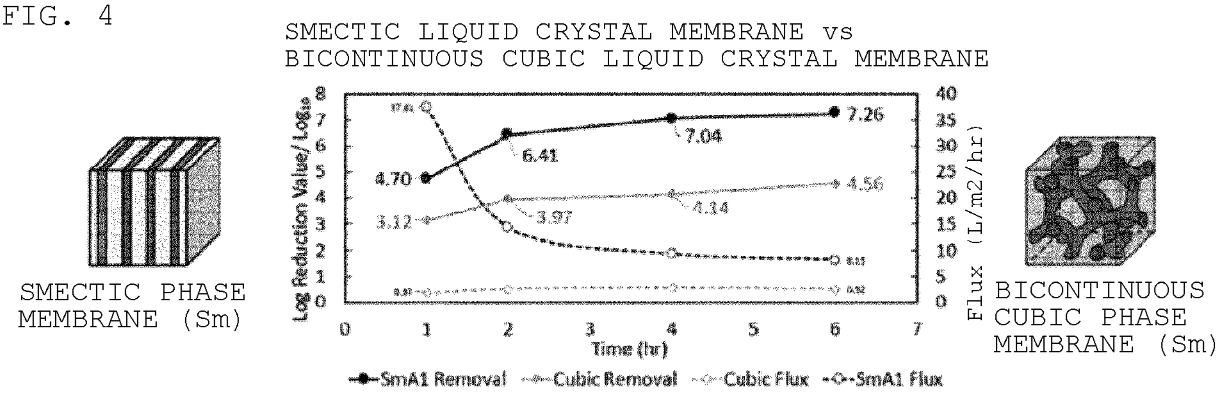
SMECTIC LIQUID CRYSTAL MEMBRANE vs
BICONTINUOUS CUBIC LIQUID CRYSTAL MEMBRANE
SMECTIC PHASE MEMBRANE (Sm)
BICONTINUOUS CUBIC PHASE MEMBRANE (Sm)
Log Reduction Value/ $Log_{10}$
Flux (L/m2/hr)
Time (hr)
4.70
6.41
7.04
7.26
3.12
3.97
4.14
4.56
SmA1 Removal
Cubic Removal
Cubic Flux
SmA1 Flux

**INTERNATIONAL SEARCH REPORT**

International application No. PCT/JP2019/032418

A. CLASSIFICATION OF SUBJECT MATTER
Int.Cl. B01D71/40(2006.01)i, B01D69/12(2006.01)i, C08F20/36(2006.01)i

According to International Patent Classification (IPC) or to both national classification and IPC

B. FIELDS SEARCHED

Minimum documentation searched (classification system followed by classification symbols)
Int.Cl. B01D71/40, B01D69/12, C08F20/36

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2016-221482 A (THE UNIVERSITY OF TOKYO) 28 December 2016, claim 1, paragraphs [0006], [0022], [0048]-[0049], fig. 1 (f) (Family: none) | 1<br>2-6 |
| A | JP 2008-291213 A (UNIVERSITY OF YAMANASHI) 04 December 2008, entire text (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 October 2019 (31.10.2019) | 12 November 2019 (12.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/032418

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-358821 A (JAPAN SCIENCE AND TECHNOLOGY CORP.) 13 December 2002, entire text & US 2004/0169158 A1, entire text & US 2006/0011887 A1 & WO 2002/080196 A1 & EP 1394816 A1 & KR 10-0579650 B1 | 1-6 |
| A | JP 2011-255255 A (THE UNIVERSITY OF TOKYO) 22 December 2011, entire text (Family: none) | 1-6 |
| P, A | JP 2018-192441 A (DIC CORPORATION) 06 December 2018, entire text (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- WO 2004060531 A
- US 2009173693 A
- JP 2011255255 A
- JP 2002358821 A

### Non-patent literature cited in the description

- **K. HOSHINO ; M. YOSHINO ; T. MUKAI ; K. KISHIMOTO ; H. OHNO ; T. KATO.** *J. Polym. Sci. A: Polym. Chem.,* 2003, vol. 41, 3486-3492
- **C. TSCHIERSKE.** *J. Mater. Chem.,* 2001, vol. 11, 2647-2671
- Liquid Crystal Handbook. Maruzen Publishing Co, 2000, 12-18